# EUROPÄISCHE PATENTANMELDUNG

(11) **EP 0 591 107 A1**
(43) Veröffentlichungstag der Anmeldung: **06.04.1994**
(21) Anmeldenummer: 93810671.3
(22) Anmeldetag: 22.09.1993
(51) Int. Cl.: B23K 11/06, B23K 11/00

(54) **Schweissnahtabdeckung von Blechrohren**

(30) Priorität: 28.09.1992 CH 3023/92
(71) Anmelder: BALTI AG, CH-6340 Baar (CH)
(72) Erfinder: Baltensperger, Walter, CH-6340 Baar (CH)
(74) Vertreter: Patentanwälte Breiter + Wiedmer AG

(57) **Zusammenfassung**

Beim Verfahren zum kontinuierlichen Auftragen von Schutzschichten zum Abdecken von einer Längsschweissnaht von Blechrohren wird eine Hotmelt-Masse als flexibler Hotmelt-Faden (28,58) kontinuierlich durch den Schweissarm (18) einer Schweissmaschine geführt, auf die Innenseite der Längsschweissnaht der Blechrohre umgelenkt, von einer Auftragseinrichtung (40,54) angedrückt, geschmolzen und homogen über die Breite der Längsschweissnaht (12) verteilt. Bevorzugt wird gleichzeitig mit der inneren eine äussere Schutzschicht aufgetragen, was erlaubt, Brenn- oder Trocknungsöfen für Lacke mit einem enormen Platz- und Energiebedarf zu eliminieren.

Eine besonders vorteilhafte Anwendung des Verfahrens liegt im Auftragen eines sterilisationsfesten Hotmelt-Streifens auf die Innenseite oder Innen- und Aussenseite der Längs- schweissnaht eines Weissblechdosenmantels.

## Beschreibung

Die Erfindung bezieht sich auf ein Verfahren zum kontinuierlichen Auftragen einer Schutzschicht zum Abdecken einer Längsschweissnaht von Blechrohren an einer Schweissmaschine mit einem Schweissarm, einem an den Schweissarm anschliessenden Auftragsarm, abhebbaren Mitteln zum Transport der stirnseitig aneinander liegenden Blechrohre in Axialrichtung und einer Auftragseinrichtung für die Schutzschicht. Weiter betrifft die Erfindung eine Vorrichtung zur Durchführung und eine Anwendung des Verfahrens.

Es sind Schweissmaschinen bekannt, welche ein "in line" angebautes Auftragssystem haben, das einen Schutzstreifen auf die Längsschweissnaht von Blechrohren, insbesondere von längsgeschweissten Büchsen- und Dosenmänteln, aufbringt. Grundsätzlich wird dabei zwischen dem Aufbringen eines Lacks und eines Pulvers unterschieden, welche an Ort und Stelle zu einer nahtabdeckenden Schicht verarbeitet werden.

Das Aufbringen eines Lacks erfolgt, je nach Maschinentyp, oben oder unten, wobei das zu behandelnde Blechrohr normalerweise an einem Auftragsarm hängend, beim Aufbringen im unteren Bereich dagegen auf einem Transportband stehend, in Längsrichtung des Auftragsarms transportiert wird.

Der Lack kann ohne Luft mit hohem Druck durch Rohre geringen Durchmessers zur Sprühdüse gebracht, mit einem Luftstrom zerstäubt oder nach einer weiteren Variante mit einem Rad aufgetragen werden.

Die Schweissnaht wird mit einem Nasslack abgedeckt, die resultierende trockene Schicht ist etwa 10 µm dick, aber im Vergleich zu einem weissen Innenlack verhältnismässig porös. Weiter besteht ein Nachteil der Verwendung von bekannten Lackauftragsvorrichtungen darin, dass die Spitzen von Punkt- und Rasterschweissstellen nicht von Lack bedeckt werden, weil dieser abfliesst.

Mit anderen bekannten Auftragsvorrichtungen an Schweissmaschinen werden die inneren Längsschweissnähte von Blechrohren geschützt, indem ein Pulverstreifen in gleichmässiger Dicke aufgetragen und in situ geschmolzen wird. Die wieder erstarrten Schichten sind in der Regel etwa 30-60 µm dick und im wesentlichen porenfrei.

Es können alle dem Fachmann zu dieser Verwendung bekannten Lacke und Pulver eingesetzt werden.

Insbesondere bei in der Lebensmittelindustrie verwendeten Weissblechdosen ist eine saubere, sterilisationsfeste Innenabdeckung der Schweissnaht von höchster Bedeutung. Die Lebensmittelechtheit bedingt weiter, dass die Schutzschicht auch harten mechanischen Bearbeitungen, wie dem Anbringen von Sicken oder dem Bördeln, standhält.

Versuche zum Aufbringen von sterilisationsfesten "Hotmelts", wie thermoplastische Kleber kurz genannt werden, welche auch der mechanischen Beanspruchung standhalten, sind bisher auch daran gescheitert, dass sie nicht mit den Verhältnissen angepassten technischen Mitteln aufgebracht werden konnten.

Der Erfinder hat sich deshalb die Aufgabe gestellt, ein Verfahren der eingangs genannten Art und eine Vorrichtung zu dessen Durchführung zu schaffen, welche den Einsatz von Hotmelt auf einfache, wirtschaftliche und wirkungsvolle Art ermöglichen. Alle unerwünschten Diffusionsprozesse mit einem abgefüllten Gut, insbesondere Lebensmitteln, sollen verhindert werden.

In bezug auf das Verfahren wird die Aufgabe erfindungsgemäss dadurch gelöst, dass eine Hotmelt-Masse als flexibler Hotmelt-Faden kontinuierlich durch den Schweissarm geführt, im Auftragsarm zur Innenseite der Längsschweissnaht der Blechrohre umgelenkt, von der Auftragseinrichtung auf die heisse Längsschweissnaht gedrückt, geschmolzen und homogen über deren Breite verteilt wird. Spezielle und weiterbildende Ausführungsformen des Verfahrens sind Gegenstand von abhängigen Patentansprüchen.

Der Begriff "Hotmelt-Faden" umfasst auch Schnüre, Drähte, Bänder, Folien, Filme und dgl. im Vergleich zum Querschnitt sehr lange Hotmelt-Massen. Nach einer speziellen Ausführungsform sollen mit dem Begriff "Hotmelt-Faden" auch durch ein flexibles Führungsrohr zur Auftragseinrichtung geleitete Hotmelt-Stücke oder ein kompaktes Hotmelt-Pulver ohne Fördermedium umfasst werden. Der Begriff "im Auftragsarm" erfasst auch einen allfälligen zwischen dem Schweiss- und dem Auftragsarm gebildeten Zwischenraum.

Gleichzeitig mit der Innenbeschichtung der Schweissnaht kann ein zweiter flexibler , ebenfalls vorzugsweise kalter Hotmelt-Faden kontinuierlich zur Aussenseite der Längsschweissnaht geführt, von einer zweiten Auftragsvorrichtung auf die heisse Längsschweissnaht gedrückt, geschmolzen und/oder homogen über deren Breite verteilt werden. Dieser zweite Hotmelt-Faden kann die gleiche chemische Zusammensetzung wie der erste, innen aufgetragene haben. Die innere und äussere Beschichtung einer Längsschweissnaht mit einer Hotmelt-Schicht hat den wesentlichen Vorteil, dass Brenn- oder Trocknungsöfen für Lacke mit einem enormen Platz- und Energiebedarf eliminiert werden können.

Die unmittelbar hintereinander angeordneten Schweiss- und Auftragsarme mit der Beschichtungseinrichtung haben weiter den Vorteil, dass die Längsschweissnaht der durchlaufenden Blechrohre beim Auftragskopf noch sehr heiss sind, in der Regel noch schwach rotglühend. Insbesondere bei einer geringen Beschichtungsdicke kann diese den Blechrohren inhärente Wärme genügen, einen oder beide Hotmelt-Fäden beim Aufdrücken zu schmelzen und die erwünschte Beschichtung ohne Zuführung weiterer Wärme zu gewährleisten. Überdies vermittelt die noch heisse Schweissnaht eine weit bessere Haftung der Schutzschicht. Bei nicht ausreichender Wärmeübertragung durch die heisse Längsschweissnaht, insbesondere bei grösseren aufzutragenden Schichtdicken und/oder beidseitiger Beschichtung, wird einem oder beiden Hotmelt-Fäden im Bereich der Auftragseinrichtung auch zusätzliche Wärme zugeführt, indem der Auftragskopf beispielsweise durch induktive oder Widerstandsheizung, eine Gasflamme oder einen Strahler erwärmt wird.

Wird ein Hotmelt-Faden, nach der häufigsten Ausführungsvariante, in Vorschubrichtung der Blechrohre zugeführt und aufgedrückt, ist bei entsprechender Ausgestaltung des Auftragskopfes ein selbstätiger Vorschub eines Hotmelt-Fadens möglich, in erster Linie auf der Aussenseite. Insbesondere bei einer Beheizung des Auftragskopfes und/oder bei einem in steilerem Winkel zur Längsschweissnaht geführten Hotmelt-Faden wird dieser von wenigstens einem zusätzlichen Antriebsorgan gezogen und zur Auftragseinrichtung gestossen.

Ein etwa senkrecht oder sogar in Gegenrichtung zum Vorschub der Blechrohre zwischen den Auftragskopf und die Blechrohre gestossener Hotmelt-Faden kann unter Erzeugung von Reibungswärme auf die heisse Längsschweissnaht gedrückt werden, was zusätzlich Reibungswärme erzeugt.

Die Auftragseinrichtung kann in einer speziellen Ausführungsform so ausgestaltet sein, dass der zwischem dem Auftragskopf und der heissen Längsschweissnaht geschmolzene flexible Hotmelt-Faden vor dem Auftragen in eine allfällige Lufteinschlüsse auswalkende Rotationsbewegung versetzt wird. Damit können sich in der Schutzschicht negativ auswirkende Lufteinschlüsse vermieden werden.

Nach einer ersten bevorzugten Variante für die Materialzufuhr wird der Hotmelt-Faden von einer Vorratsrolle abgehaspelt und durch den Schweissarm zur Auftragseinrichtung geführt. Das Beschichtungsverfahren muss ohne besondere Massnahmen nur unterbrochen werden, wenn die Rolle zu Ende ist und der Hotmelt-Faden der nächsten Rolle eingespeist werden muss. Das Ende des Hotmelt-Fadens der einen Rolle kann z.B. beim Anlegen von Vorratsschlaufen mit dem Beginn des Hotmelt-Fadens der anderen Rolle verschweisst werden, sodass ein vollständig kontinuierlicher Betrieb gewährleistet ist.

Nach einer anderen bevorzugten Variante wird der flexible Hotmelt-Faden in-line aus einer verflüssigten Masse erzeugt, in dem er beispielsweise kontinuierlich extrudiert oder gezogen wird. Durch Anlegen von Reserveschlaufen und Verschweissen der Enden kann auch bei allfälligen materialseitigen Betriebsunterbrüchen ein vollständig kontinuierlicher Betrieb gewährleistet werden.

Das erfindungsgemässe Verfahren mit dem wesentlichen Merkmal der fadenförmigen Zufuhr der Hotmelt-Masse durch den Schweissarm zu einer Auftragseinrichtung lässt zahlreiche technische Lösungen offen, welche jedoch immer eine innere oder eine innere und äussere Versiegelung der Längsschweissnaht von Blechrohren zum Gegenstand haben.

Beim Auftragen der/des Schutzstreifen/s kann die Längsschweissnaht nicht nur oben, sondern auch unten oder in jeder seitlichen Lage positioniert sein. Dies ist abhängig von der Lage der Auftragseinrichtungen, der Anordnung der Transportvorrichtung und bei "in-line" arbeitenden Schweissmaschinen von der Ausrichtung des Schweissdrahtes auf die Auftragseinrichtungen. In der Praxis erfolgt der Auftrag von Hotmelt-Streifen meist oben, die Blechrohre hängen an der Transportvorrichtung. Die Blechrohre können von einem obenliegenden Transportband oder vorzugsweise von zwei seitlichen Transportbändern in Axialrichtung einfach weiter geschoben werden.

Die erfindungsgemäss eingesetzten Hotmelt-Massen haben in der Regel einen Schmelzpunkt im Bereich von 100-300°C, auch die lebensmittelechten. Die Auftragsköpfe werden, wenn notwendig, von Sensoren kontrolliert, programmgesteuert auf eine entsprechende Temperatur gebracht und auf dieser gehalten.

Die Breite der aufgetragenen oder aufgespritzten Hotmelt-Streifen richtet sich nach der Schweissnaht, sie liegt in der Praxis im Bereich von 3 bis 20 mm. Die Hotmelt-Streifen werden sofort hart, bei bevorzugten Schichtdicken von 10 - 150 µm, insbesondere 20 - 50 µm, drücken sich die beim Schweissen erzeugten Spitzen nicht durch, wie dies z.B. beim Lack-Beschichtungsverfahren der Fall sein kann.

In bezug auf die Vorrichtung wird die Aufgabe erfindungsgemäss dadurch gelöst, dass der Schweissarm mindestens eine integrierte Zuführleitung für den flexiblen Hotmelt-Faden, und der wenigstens im Bereich der Beschichtung einen Hohlraum aufweisende Auftragsarm einen Schmelzkopf zum Aufbringen des Hotmelt-Fadens auf die Innenseite der Längsschweissnaht aufweist. Spezielle und weiterbildende Ausführungsformen der Vorrichtung sind Gegenstand von entsprechenden, abhängigen Patentansprüchen.

Der Auftragsarm ist in an sich bekannter Weise einends stirnseitig mit dem Schweissarm der Schweissmaschine verbunden und anderenends in Axialrichtung frei beweglich vorzugsweise abgestützt.

Die im Schweissarm integrierte Zuführleitung für den Hotmelt-Faden entspricht in etwa dem Servicekanal in bekannten Anlagen. Diese können deshalb problemlos für den erfindungsgemässen Betrieb umgerüstet werden. Weiter kann dieselbe Zuführleitung für elektrische Leiter oder dgl. benutzt werden, sofern dies der einen Durchmesser von beispielsweise etwa 2 bis 6mm aufweisende Hotmelt-Faden zulässt. Die elektrischen Leiter oder dgl. können auch in einer zweiten Zuführleitung im Schweissarm angeordnet sein.

Es sind eine grosse Zahl von Hotmelts für den erfindungsgemässen Einsatz geeignet, besonders interessieren lebensmittelfeste Hotmelts, beispielsweise auf der Basis eines Polyesters oder eines Epoxyharzes.

Nach einer bevorzugten Ausführungsform umfasst die erfindungsgemässe Vorrichtung auch einen äusseren zweiten Auftragskopf zum Aufbringen eines zweiten flexiblen Hotmelt-Fadens auf die Aussenseite der Längsnaht. Wie der innere erste Schmelzkopf ist auch der äussere zweckmässig in an sich bekannter Weise beheizbar, z.B. mittels Induktion, ohmscher Widerstände, einer Gasflamme oder einem Strahler.

Ein Auftragskopf, sei es ein innerer oder ein äusserer, ist so ausgestaltet, dass die entsprechende Schweissnahtabdeckung in bezug auf die Breite oder Dicke programmgesteuert einstellbar aufgetragen werden kann. Mit dem Begriff "Auftragen" wir hier auch das Aufrollen, Aufstreichen oder Aufspritzen umfasst, wobei der Auftragskopf die entsprechenden, an sich bekannten Mittel zur Durchführung umfasst, beispielsweise ein Rackel, einen Abstreifer oder eine Düse.

Die von den vorwärtsgeschobenen Blechrohren auf den angepressten Hotmelt-Faden ausgeübte Zugkraft bzw. Schiebekraft kann durch ein rotierendes oder eine Hubbewegung ausführendes Antriebsorgan unterstützt werden, welches elektrisch, pneumatisch oder hydraulisch angetrieben ist. Bei einer vertikalen oder in bezug auf die Vorschubbewegung der Blechrohre gegenläufigen Zuführung des flexiblen Hotmelt-Fadens ist dieser Antrieb unerlässlich, der Faden muss nicht nur gezogen, sondern zur Auftragsstelle gestossen werden.

Wenigstens der innere erste Hotmelt-Faden kann in einem ebenfalls flexiblen Rohr geführt und durch dieses geschützt sein. Im Bereich eines Antriebsorgans kann das flexible Rohr auch geöffnet sein, damit beispielweise das Drehmoment einer Zugrolle übertragen werden kann. Dieses flexible Rohr kann auch zur druckluftlosen Förderung von stückigem oder pulverförmigem Hotmeltgut eingesetzt werden, welche wie ein einstückiger Hotmelt-Faden in den Auftragskopf gelangen und geschmolzen werden.

Das erfindungsgemässe Verfahren und die Vorrichtung zu dessen Durchführung haben den industriell vorher nicht realisierbaren Vorteil, dass eine Hotmelt-Schicht auf die Innenseite einer Längsschweissnaht von Blechrohren aufgebracht werden kann, welche benachbart des Schweissdrahtes ist. Deshalb kann nun einerseits die beim Schweissen auf die Blechrohre übertragene Wärme genutzt werden, und andererseits sind die Längsschweissnähte der Blechrohre noch genau gerichtet. Weiter wird erfindungsgemäss die Möglichkeit eröffnet, innen und aussen eine Hotmelt-Schutzschicht auf die Längsschweissnaht aufzutragen. Die sich daraus ergebende Eliminierung von Einbrenn- und Trocknungsöfen für Lacke und dgl. bietet wegen des weitaus geringeren Investitions-, Platz- und Energiebedarfs einem Abfüller die Möglichkeit, die Büchsen seiner Produktion vorgeschaltet selbst herzustellen. Dies wiederum bringt neben wirtschaftlichen den ökologischen Vorteil, dass keine sperrigen Büchsentransporte mehr ausgeführt werden müssen.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig.1 einen teilweisen Querschnitt durch ein Blechrohr im Bereich der Längsschweissnaht,
- Fig.2 eine teilweise aufgeschnittene Ansicht einer Vorrichtung zum kontinuierlichen Auftragen eines Hotmelt-Fadens,
- Fig.3 eine detailliertere Darstellung mit Aussenauftrag des Hotmelt-Streifens, und
- Fig.4 eine Teilansicht in Axialrichtung mit versetzten Transportbändern.

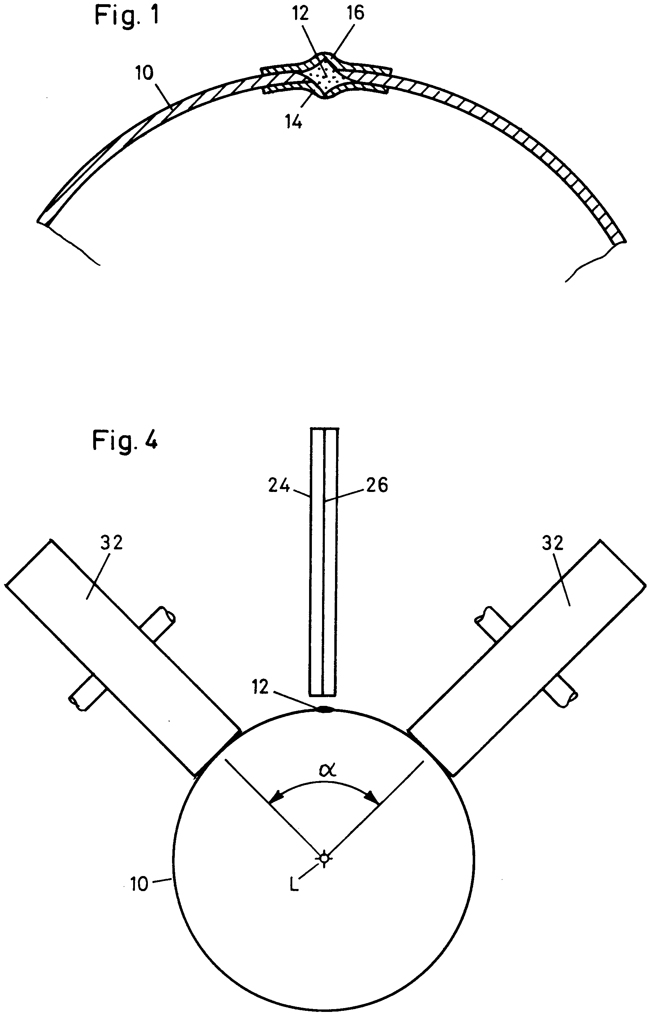

Ein in Fig. 1 teilweise gezeigtes Blechrohr 10 hat eine Längsschweissnaht 12, welche auf der Innenseite mit einem längslaufenden Hotmelt-Streifen 14 aus einem Polyester abgedeckt ist. Auf der Aussenseite verläuft ein entsprechender Hotmelt-Streifen 16.

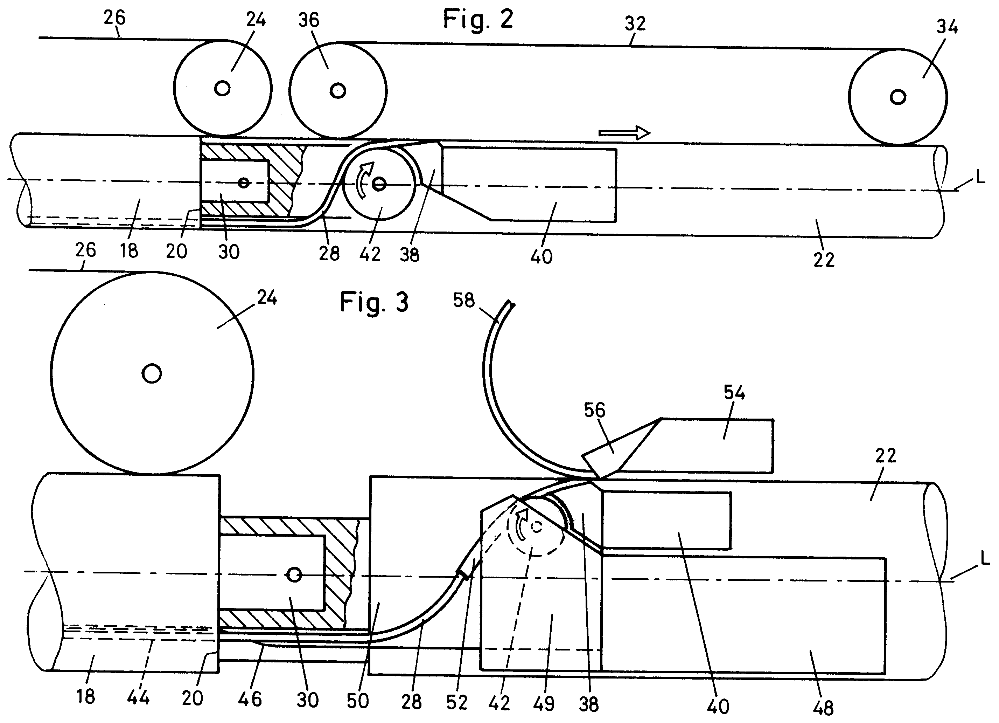

In der Vorrichtung zum kontinuierlichen Auftragen von Hotmelt-Streifen zum Abdecken der Innenseite (Fig. 2) und wahlweise auch der Aussenseite einer Längsschweissnaht gemäss Fig.3 sind die stirnseitig aneinander liegenden Blechrohre der Übersichtlichkeit wegen nicht eingezeichnet. Am Schweissarm 18 einer handelsüblichen, nicht gezeigten Schweissmaschine ist im Bereich der Stirnseite 20 ein über eine Umlenkrolle 24 geführter Schweissdraht 26 angeordnet. Der Schweissarm 18 hat beispielsweise einen Durchmesser von 60 mm, er ist insbesondere zum Verschweissen von Blechrohren eines Durchmessers von etwa 65 bis 200 mm geeignet. Der Durchmesser der Blechrohre kann also nur geringfügig, aber auch sehr viel grösser sein als derjenige des Schweissarms 18. Für kleinere oder grössere Blechrohre ist ein entsprechend dimensionierter Schweissarm 18 einsetzbar.

Mit dem Schweissarm 18 coaxial verbunden ist ein Auftragsarm 22, welcher beispielsweise aus einem Stahlrohr besteht. Der Auftragsarm 22 mit der gleichen Längsachse L wie der Schweissarm 18 ist mit Befestigungsmitteln 30 angeflanscht.

Die auf dem Schweissarm 18 zusammengefügten, nicht dargestellten Blechrohre 10 (Fig.1) laufen in-line auf den Auftragsarm 22, wo sie von einem endlosen Transportband 32 weiter geschoben werden, welches von zwei Umlenkrollen 34, 36, eine davon ist die Antriebsrolle, geführt ist. Das Transportband 32 hat eine magnetische Halterung für die Blechrohre und einen variablen Antrieb. Die Transporteinrichtung 32, 34, 36 kann nach oben weggeklappt werden.

Ein Hotmelt-Faden 28 wird von einem Auftragskopf 38 einer Auftragseinrichtung 40 gegen die Längsschweissnaht 12 (Fig. 1) eines in Fig.2 nicht dargestellten Blechrohrs gedrückt, welches seinerseits vom Transportband 32 niedergehalten wird. Unter Einwirkung der noch schwach rotglühenden Längsschweissnaht und des Schmelzkopfes 38 schmilzt der HotmeltFaden 28 und bildet darauf eine regelmässige Schutzschicht.

Der kontinuierlich schmelzende Hotmelt-Faden, eingeklemmt zwischen niedergehaltenem Blechrohr und Auftragskopf, wird durch die Schubkraft der vorwärtsgeschobenen Blechrohre automatisch nachgezogen. Weiter wird der Hotmelt-Faden 28 im vorliegenden Fall über ein zusätzliches Antriebsorgan 42 geführt, welches im Auftragsarm 22 angeordnet ist und elektrisch angetrieben wird. Der Hotmelt-Faden 28 wird durch eine Zuführleitung 44 im Schweissarm 18 gezogen und über das rotierende Antriebsorgan 42 geleitet, von wo er zwischen die Blechrohre und den Auftragskopf 38 gestossen wird.

In der um den Aussenauftrag erweiterten Detaildarstellung gemäss Fig.3 sind noch einige Einzelheiten ersichtlich.

Der Hotmelt-Faden 28 füllt nicht die ganze, in den Schweissarm 18 integrierte Zuführleitung 44 aus. Deshalb können zusätzlich noch elektrische Leitungen 46 durch die Zuführleitung 44 zu einem Elektromotor 48 mit Getriebe 49 für das Antriebsorgan 42 geführt werden.

Der kalte Hotmelt-Faden 28 wird durch den Innenraum im Auftragsarm 22 in Richtung des Antriebsorgans 42 geführt und ist teilweise in einem flexiblen Rohr 52 geführt und geschützt.

Oberhalb der Blechrohre ist eine äussere zweite Auftragseinrichtung 54 mit einem zweiten Auftragskopf 56 angeordnet. Ein äusserer zweiter, kalter Hotmelt-Faden 58 in gleicher chemischer Zusammensetzung wie der innere erste HotmeltFaden 28 wird zwischen den zweiten Auftragskopf 56 und die Aussenseite der Längsschweissnaht der Blechrohre geführt und dort unter Bildung einer äusseren Hotmelt-Schicht 16 auf der Längsschweissnaht 12 ebenfalls geschmolzen.

Mit einer Vorrichtung nach Fig.3 wird eine Längsschweissnaht gleichzeitig innen und aussen beschichtet.

In Fig.4 ist angedeutet, dass die Blechrohre 10 von zwei Transportbändern 32, magnetisch darauf gezogen, bewegt werden. Die Transportbänder 32 sind in bezug auf die Längsachse L um einen Winkel a von etwa 90° versetzt, mit einer etwa vertikal verlaufenden Winkelhalbierenden. Die obenliegende Längsschweissnaht 12 ist vom auf der Umlenkrolle 24 angedeuteten Schweissdraht 26 erzeugt worden.

## Patentansprüche

1. Verfahren zum kontinuierlichen Auftragen einer Schutzschicht (14) zum Abdecken einer Längsschweissnaht (12) von Blechrohren (10) an einer Schweissmaschine mit einem Schweissarm (18), einem an den Schweissarm (18) anschliessenden Auftragsarm (22), abhebbaren Mitteln (32, 34, 36) zum Transport der stirnseitig aneinanderliegenden Blechrohre (10) in Axialrichtung (L) und einer Auftragseinrichtung (40) für die Schutzschicht (14)
dadurch gekennzeichnet, dass
eine Hotmelt-Masse als flexibler Hotmelt-Faden (28) kontinuierlich durch den Schweissarm (18) geführt, im Auftragsarm (22) zur Innenseite der Längsschweissnaht (12) der Blechrohre (10) umgelenkt, von der Auftragseinrichtung (40) auf die heisse Längsschweissnaht (12) gedrückt, geschmolzen und homogen über deren Breite verteilt wird.

2. Verfahren nach Anspruch 1, dadurch gekennzeichnet, dass gleichzeitig ein zweiter flexibler Hotmelt-Faden (58), vorzugsweise der gleichen chemischen Zusammensetzung wie der erste, kontinuierlich zur Aussenseite der Längsschweissnaht (12) geführt, von einer zweiten äusseren Auftragseinrichtung (54) auf die heisse Längsschweissnaht (12) gedrückt, geschmolzen und homogen über deren Breite verteilt wird.

3. Verfahren nach Anspruch 1 oder 2, dadurch gekennzeichnet, dass bei nicht ausreichender Wärmeübertragung durch die heisse Längsschweissnaht (12) einem flexiblen Hotmelt-Faden (28, 58) im Bereich der Auftragseinrichtung (40, 54) zusätzliche Wärme, vorzugsweise durch induktive oder Widerstandsheizung, eine Gasflamme oder einen Strahler, zugeführt wird.

4. Verfahren nach einem der Ansprüche 1-3, dadurch gekennzeichnet, dass ein flexibler Hotmelt-Faden (28, 58) von wenigstens einem zusätzlichen Antriebsorgan (42) gezogen und zur Auftragseinrichtung (40, 54) gestossen wird.

5. Verfahren nach Anspruch 4, dadurch gekennzeichnet, dass ein Hotmelt-Faden (28, 58) etwa senkrecht oder in Gegenrichtung zum Vorschub der Blechrohre (10) zur Auftragseinrichtung (40, 54) gestossen und unter Erzeugung von Reibungswärme auf die heisse Längsschweissnaht (12) gedrückt wird.

6. Verfahren nach einem der Ansprüche 1-5, dadurch gekennzeichnet, dass der zwischen der Auftragseinrichtung (40, 54) und der heissen Längsschweissnaht (12) geschmolzene flexible Hotmelt-Faden (28, 58) vor dem Auftragen in eine Lufteinschlüsse ausschaffende Rotationsbewegung versetzt wird.

7. Verfahren nach einem der Ansprüche 1-6, dadurch gekennzeichnet, dass der flexible Hotmelt-Faden (28, 58) inline abgehaspelt oder aus einer verflüssigten Phase erzeugt wird.

8. Vorrichtung zur Durchführung des Verfahrens nach einem der Ansprüche 1-7,
dadurch gekennzeichnet, dass
der Schweissarm (18) mindestens eine integrierte Zuführleitung (44) für den flexiblen Hotmelt-Faden (28), und der wenigstens im Bereich der Beschichtung einen Hohlraum aufweisende Auftragsarm (22) eine Auftragseinrichtung (40) mit einem Schmelzkopf (38) zum Aufbringen des Hotmelt-Fadens (28) auf die Innenseite der Längsschweissnaht (12) aufweist.

9. Vorrichtung nach Anspruch 8, dadurch gekennzeichnet, dass sie eine vorzugsweise beheizbare äussere zweite Auftragseinrichtung (54) mit einem äusseren Auftragskopf (56) zum Aufbringen des zweiten Hotmelt-Fadens (58) auf die Aussenseite der Längsschweissnaht (12) aufweist.

10. Vorrichtung nach Anspruch 8 oder 9, dadurch gekennzeichnet, dass der Schmelzkopf (38, 56) Mittel zum Auftragen, Aufrollen, Aufstreichen oder Aufspritzen der geschmolzenen Hotmelt-Masse auf die Längsschweissnaht (12) hat.

11. Vorrichtung nach einem der Ansprüche 8-10, dadurch gekennzeichnet, dass wenigstens der innere flexible Hotmelt-Faden (28, 58) mit einem rotierenden oder eine Hubbewegung ausführenden Antriebsorgan (42) in Eingriff steht.

12. Vorrichtung nach einem der Ansprüche 8-11, dadurch gekennzeichnet, dass wenigstens der erste flexible Hotmelt-Faden (28, 58) wenigstens teilweise in einem flexiblen Rohr (52) geführt und geschützt ist, wobei dieses Rohr (52) im Bereich eines Antriebsorgans (42) über einen Teil des Umfangs auch geöffnet ist.

13. Vorrichtung nach einem der Ansprüche 8-12, dadurch gekennzeichnet, dass im Bereich des Auftragsarms (22) zwei Transportbänder (32) für die Blechrohre (10) angeordnet ist, welche bezüglich der Längsachse (L) versetzt ist, bevorzugt um einen Winkel (α) von etwa 90°, mit einer etwa vertikal verlaufenden Winkelhalbierenden.

14. Anwendung des Verfahrens nach einem der Ansprüche 1-7 zum Auftragen eines sterilisationsfesten Hotmelt-Streifens (14, 16) auf die Innenseite oder Innen- und Aussenseite der Längsschweissnaht (12) eines Weissblechdosenmantels (10).
